Europäisches Patentamt

European Patent Office

Office européen des brevets

(11) Veröffentlichungsnummer: **0 286 962**

**A2**

(12) **EUROPÄISCHE PATENTANMELDUNG**

(21) Anmeldenummer: 88105482.9

(51) Int. Cl.⁴: **G02B 27/00**

(22) Anmeldetag: 06.04.88

(30) Priorität: 14.04.87 DE 3712663

(43) Veröffentlichungstag der Anmeldung:
19.10.88 Patentblatt 88/42

(84) Benannte Vertragsstaaten:
**AT BE CH DE ES FR GB GR IT LI LU NL SE**

(71) Anmelder: **HOLTRONIC GESELLSCHAFT FÜR HOLOGRAPHIE UND ELEKTRO-OPTIK MBH**
**Melchior-Huber-Strasse 25**
**D-8011 Ottersberg(DE)**

Anmelder: **Bayerische Motoren Werke Aktiengesellschaft**
**BMW-Haus Postfach 40 02 40 Petuelring 130**
**- AJ-33**
**D-8000 München 40(DE)**

(72) Erfinder: **Dausmann, Günter J.**
**Schlachthausstrasse 9**
**D-8058 Erding(DE)**
Erfinder: **Hacker, Norbert**
**Sedlmayrstrasse 14**
**D-8000 München 19(DE)**
Erfinder: **Gnädig, Klaus A., Dr.**
**Dreimühlenstrasse 7**
**D-8000 München 5(DE)**

(74) Vertreter: **Gossel, Hans K., Dipl.-Ing. et al**
**Rechtsanwälte E. Lorenz - B. Seidler M.**
**Seidler - Dipl.-Ing. H.K. Gossel Dr. I. Philipps**
**- Dr. P.B. Schäuble Dr. S. Jackermeier -**
**Dipl.-Ing. A. Zinnecker**
**Widenmayerstrasse 23 D-8000 München**
**22(DE)**

(54) **Anzeigesystem zum möglichst akkommodationsfreien Ablesen von Informationen bei auf Fernsicht eingestelltem Auge.**

(57) Ein Anzeigesystem, vorzugsweise für Kraftfahrzeuge, besitzt ein Abbildungssystem, das von einer Lichtquelle über einen Kollimator oder dergleichen ausgeleuchtete, der Informationsdarstellung dienende Objekte sichtbar macht. Damit der Fahrer die der Informationsdarstellung dienenden Objekte akkommodationsfrei lesen kann, wird die anzuzeigende Information als virtuelles Bild in für die beobachtende Person akkommodationsfreier Darstellung in die Frontscheibe (1) eines Kraftfahrzeugs oder dergleichen eingespiegelt (Head-Up-Display) oder durch ein optisches Linsen-und/oder Spiegelsystem und/oder durch holografisch-optische Elemente (HOE) im Bereich des Armaturenbrettes oder dergleichen dargestellt.

## Anzeigesystem zum möglichst akkommodationsfreien Ablesen von Informationen bei auf Fernsicht eingestelltem Auge.

Die Erfindung betrifft ein Anzeigesystem zum möglichst akkommodationsfreien Ablesen von Informationen bei auf Fernsicht eingestelltem Auge. Es ist insbesondere bei der Kraftfahrzeugentwicklung ein Bestreben, Anzeigesysteme zu schaffen, die dem Fahrdr ein ermüdungsfreies und möglichst akkommodationsfreies Ablesen von Informationen von Anzeigeeinrichtungen gestatten. Die Erfindung geht dabei von der Erkenntnis aus, daß ein ermüdungsfreies und die Aufmerksamkeit des Fahrers wenig ablenkendes Ablesen von Informationen dann möglich ist, wenn diese in den Bereich seines Blickfeldes eingegeben werden, so daß der Fahrer seine Aufmerksamkeit von der Straße überhaupt nicht oder aber nur kurzfristig ablenken muß. Diese Eingabe der Informationen in den Bereich des Blickfeldes des Fahrers kann einmal dadurch geschehen, daß diese in die Frontscheibe eingespiegelt werden, so daß der Fahrer seinen Blick überhaupt nicht von der Straße abwenden muß. Weiterhin ist es möglich, die Information in gut sichtbarer Form im Bereich des Armaturenbrettes erscheinen zu lassen, so daß der Fahrer zum Lesen der Information seinen Blick nur kurzfristig senken muß. In beiden Fällen soll dabei die Information so erscheinen, daß der Fahrer diese möglichst akkommodationsfrei lesen kann, daß er also sein Auge nicht auf ein näheres Objekt einstellen muß. Die Umstellung des Blickes von Weitsicht auf Nahsicht und umgekehrt ist insbesondere für ältere Fahrer anstrengend und möglicherweise auch zeitraubend. Durch im Blickfeld des Fahrers liegende Anzeigesysteme, von denen der Fahrer die Informationen akkommodationsfrei ablesen kann, erhöhen die Fahrsicherheit wesentlich. Erfindungsgemäß wird die akkommodationsfreie Ablesung von Informationen dadurch geschaffen, daß die Anzeigesysteme in der Ferne erscheinende virtuelle Bilder erzeugen.

Die Erfindung kann grundsätzlich durch zwei Anzeigesysteme verwirklicht werden, nämlich einmal durch ein Anzeigesystem mit Einspiegelung der Information in die Frontscheibe (im Folgenden Head-Up-Display) und zum anderen durch die gut lesbare Darstellung der Information als virtuelles Bild im Bereich des Armaturenbrettes (im Folgenden Head-Down-Display).

I. Beim Head-Up-Display (HUD) wird die Anzeige als virtuelles Bild im Abstand von einigen Metern vor dem Fahrer dargestellt. Das in der Anzeige erscheinende virtuelle Bild kann sich auf die jeweiligen Fahrzustände beziehen oder aber auch andere Informationen betreffen.

In besonders eindrucksvoller Weise läßt sich in der Anzeige das virtuelle Bild beispielsweise eines Bremsbalkens darstellen, der seinen Abstand zum Fahrer bzw. zum Fahrzeug entsprechend der gefahrenen Geschwindigkeit ändert. Die Größe oder Länge des Bremsbalkens bedeutet dann ein Maß für den Bremsweg, den der Fahrer noch bis zu einem in seinem Blickfeld liegenden Gegenstand zurücklegen muß.· Das HUD kann konventionell mit Linsen und Spiegeln aufgebaut sein, aber auch aus holografisch optischen Elementen (HOE). Werden Flächenhologramme im Strahlengang verwendet, kann bei Ausleuchtung mit Weißlicht immer eine Kompensation der auftretenden Farbfehler gemacht werden.

II. Das Head-Down-Display (HDD) befindet sich wie konventionelle Anzeigen im Armaturenbrett, nur mit dem Unterschied, daß die Anzeige als virtuelles Bild im Abstand von einigen Metern vor dem Fahrer erscheint.

Das Head-Down-Display kann konventionell mit Linsen und Spiegeln, aber auch mit holografisch optischen Elementen aufgebaut sein.

Die Systeme bestehen aus folgenden Teilen:

### 1. Informationsdarstellung

Diese kann eine Kathodenstrahlröhre (CRT), eine Flüssigkristallanzeige (Liquid Cristal Display = LCD), eine Spaltblende oder aber auch ein Hologramm sein, das die Information in der gewünchten Entfernung abbildet.

### 2. Abbildungssystem

Das Abbildungssystem kann konventionell mit Linsen und Spiegeln aufgebaut sein, aber auch aus HOE.

### 3. Kompensationsoptik (nur für Head-Up-Display)

Durch die Krümmung der Windschutzscheibe ist eine Kompensationsoptik erforderlich, da ansonsten Verzerrungen und Doppelbilder entstehen. Die Kompensation geschieht entweder durch eine entsprechend geschliffene Abbildungslinse bzw. Spiegel, die das Objekt in einer bestimmten Entfernung vor dem Auge abbilden und gleichzeitig die Abbildungsfehler, die durch die Frontscheibe entstehen, korrigieren. Auch ein entsprechend geschliffener Spiegel oder ein HOE, das nur die Scheibenkrümmung korrigiert (kompensiert), oder ein Planspiegel, bzw. holografischer Planspiegel, der gebogen wird, führen zur Kompensation.

## 1. Anzeige der Information

### 1.1 Anzeige mit einer CRT

In Flugzeugen und überall dort, wo holografische Combiner verwendet werden, wird die Information auf schmalbandig emittierenden CRT angezeigt.
Der Nachteil hierbei ist:

-Die Anzeige kann nur monochromatisch dargestellt werden.

-Die Lichtleistung für eine Reflexion an der Windschutzscheibe ist zu gering.

### 1.2 Anzeige mit einem LCD

Die Vorteile eines LCD sind:

-Mehrfarbige Anzeigen sind möglich.

-Keine Probleme mit der Lichtstärke.

### 1.3 Für die Anzeige einfacher Symbole, wie z.B. des Bremsbalkens würde auch eine ausgeleuchtete Spaltblende genügen.

### 1.4 Die Information ist in einem Hologramm aufgezeichnet.

Einfache, sich nicht ändernde Anzeigen, wie z.B. Warnanzeigen, können direkt in einem Hologramm aufgezeichet und dann in einer bestimmten Entfernung virtuell oder reell abgebildet werden.
Eine Anzeige der Information in verschiedenen Entfernungen kann man durch Änderung der Lage der Referenzlichtquelle oder durch Vrwendung eines Multiplexhologramms erreichen. Das Mulitplexhologramm besteht aus vielen Einzelhologrammen, welche die Information jeweils in einer anderen Entfernung rekonstruieren.
Die Hologramme können jedem Hologrammtyp entsprechen, z.B. Weißlicht-Transmissionshologramm, Transmissionshologramm, verspiegeltes Transmissionshologramm etc.

## 2. Abbildungssysteme

### 2.1 Abbildung der Information durch ein konventionelles Linsensystem

Bei der Abbildung der Information in eine feste Entfernung (z.B. 10 m vom Fahrer entfernt) kann ein konventionalles Abbildungssystem mit großer Austrittsluke verwendet werden (z.B. AL min = 150 mm). Das System soll wegen der beengten Raumverhältnisse relativ kurzbrennweitig sein (z.B. f' ca. 150 mm), was einen großen optischen Korrektionsaufwand der Abbildungsfehler verlangt (siehe Bild 5).

### 2.2 Abbildung einer im Raum verschiebbaren Information

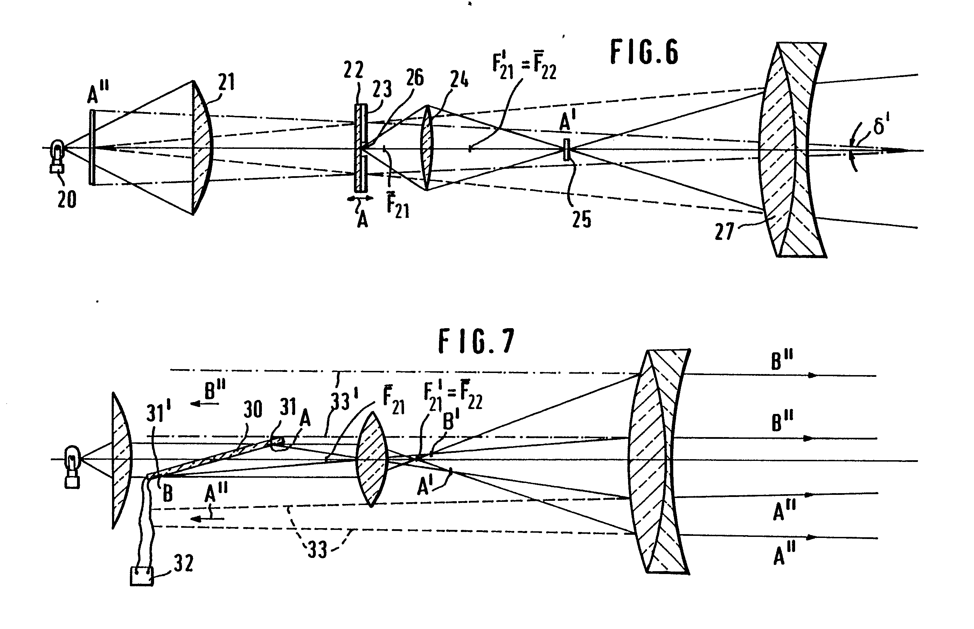

Bei einer variablen Informationsabbildung, die in unserem speziellen Fal einen Bremsbalken oder eine Richtungsanzeige darstellt, ist es mit einem normalen Abbildungssystem sehr schwierig, die Lage des Balkens im Raum, also dessen simulierte Entfernung, festzustellen, da bei einer Abbildung des Balkens beispielsweise nach $-\infty$ dieser vergrößert und nicht wie ein reales Objekt, das sich vom Auge entfernt, verkleinert erscheint.
Durch ein afokales Linsensystem, bei dem Objektiv und Okular ein bestimmtes Brennweitenverhältnis und einen bestimmten Abstand voneinander haben, ist es möglich, den Abbildungsmaßstab für jede Bildentfernung konstant zu halten. Für die Gesamtvergrößerung $\beta'$ dieses afokalen Systems gilt, wie aus Fig. 6 ersichtlich ist,

$$\beta'_{24} = \frac{A'}{A}$$

$$\beta'_{27} = \frac{A''}{A'}$$

$\beta' = \beta'_{24} \times \beta'_{27}$
$\beta'$ = Gesamtvergrößerung des Systems
$\beta'_{24}$ = Vergrößerung der Linse 24
$\beta'_{27}$ = Vergrößerung der Linse 27
$A$ = Größe des Spalts der Blende 23
$A'$ = Größe des durch die Linse 24 reell abgebildeten Spaltes
$A''$ = Größe des durch die Linse 27 virtuell abgebildeten Objekts $A'$

Bei unterschiedlichen Entfernungen des imaginär abgebildeten Bildes $A''$ ergibt sich eine entsprechende Verkleinerung des Sehwinkels $\sigma'$. Durch diese Verkleinerung des Sehwinkels $\sigma'$, der einem gleichzeitig von beiden Augen erfaßten realen Objekt in der gleichen Entfernung vom Auge entspricht, kann die Lage des Bildes (Balkens) im Raum von dem Betrachter empirisch bestimmt werden. Voraussetzung hierzu ist natürlich, daß der Betrachter gleichzeitig mit beiden Augen das real abgebildete Objekt 25 durch die Linse 27 betrachtet.

### 2.3 Abbildung der Information durch ein holographisch-optisches Element (HOE)

Hier wird die Abbildung der Information in einer festen Entfernung, anstatt durch ein optisches Abbildungssystem durch eine holografische Linse abgebildet.

### 2.4 Abbildungssystem mit einem Informationshologramm

Hier wird die Information, die normalerweise aus einer LCD oder CRT (Kathodenstrahlröhre) besteht, durch ein Hologramm ersetzt. Bei der Rekonstruktion mit einer punktförmigen Lichtquelle entsteht entsprechend der Aufnahmegeometrie ein virtuelles oder reelles Bild.

2.4.1 Das virtuelle Bild (Bilder) wird in einer festen Entfernung vom Betrachter rekonstruiert.

2.4.2 Das virtuelle Bild wird durch Änderung der Lage der Rekonstruktionslichtquelle im Rahm verschoben. Allerdings entspricht hier der Sehwinkel nicht dem eines realen Objekts in derselben Entfernung.

2.4.3 Abbildung durch ein zweistufiges System wie in 2.2
Bei der Rekonstruktion des Hologramms (der Hologramme) wird ein reelles Zwischenbild (Zwischenbilder) erzeugt. Durch Änderung der Lage der Referenzlichtquelle (Referenzlichtquellen) wird das Zwischenbild (die Zwischenbilder) in Lage und Größe verändert. (Die Referenzlichtquellen können unterschiedliche Positionen von einander haben.) Durch eine langbrennweitige Linse mit großem Durchmesser (die auch durch ein HOE ersetzt werden könnte), deren Brennpunkt F mit dem Brennpunkt F′ des Hologramms zusammenfällt, wird das durch das Hologramm erzeugte Zwischenbild so abgebildet, daß der Sehwinkel σ′ dem eines realen Objekts in derselben Entfernung entspricht (Bild 8a, 8b).

2.5 Abbildungssystem mit einem Multiplexhologramm

2.5.1 Mehrere Bilder werden gleichzeitig in einem festen Abstand vom Betrachter virtuell rekonstruiert.

2.5.2 Die Information wird in verschiedenen Entfernungen dargestellt, indem man für jede Entfernung eine Aufnahme macht und dkiese dann einzeln rekonstruiert (Bild 10).

2.5.3 Durch eine zweistufige Abbildung wie in 2.2 wird für die verschiedenen Entfernungen ein reelles Zwischenbild erzeugt, welches durch ein binokulares System virtuell abgebildet wird (Bild 11).

2.6 Hologramm mit abbildender Funktion und Kompensation der Windschutzscheibenkrümmung
Zur Abbildung der Information nach - ∞ kann man, wie schon erwähnt, ein konventionelles Abbildungssystem, aber auch ein Hologramm mit abbildender Wirkung und gleichzeitig kompensierter Eigenschaft verwenden, d.h. die Abbildungsfehler, die durch die Windschutzscheibe entstehen, werden in der holografischen Linse schon berücksichtigt.
Bei einer Information, die im Raum verschiebbar sein soll, muß, wie in 2.2 und 2.3 beschrieben, eine zweite Linse bzw. ein zweites Hologramm eingesetzt werden.

Eine Kompensation der Krümmung und eine gleichzeitige Abbildung kann auch durch eine entsprechend geschliffene Linse erzielt werden.
Bei all den aufgezeigten Abbildungssystemen (siehe 2) könnte jeder Hologrammtyp verwendet werden, z.B. Weißlich-Transmissions-bzw. Weißlicht-Reflexionshologramme, Transmissionshologramme, verspiegelte Transmissionshologramme etc.

## 3. Kompensationsoptik (nur für HUD)

Die durch die Windschutzscheibenkrümmung entstehenden Abbildungsfehler müssen durch eine entsprechend berechnete Optik kompensiert werden.
Dies kann durch speziell geschliffene Linsen oder Spiegel erfolgen.
Nachteilig hierbei ist, daß die durch die Fertigung auftretenden Toleranzen nicht ausgeglichen werden können.
Bei einem Biegesiegel oder einem Hologramm können diese Toleranzen durch eine Nachkorrektur ausgeglichen werden.

3.1 Korrektur in der Horizontalen, mit Hilfe eines durch Biegung gekrümmten Spiegels
Bei der Einspiegelung der Information in die Scheibe kommt es bei beidäugigem Sehen durch deren Krümmung zu Doppelbildern in der Horizontalen. Mit Hilfe eines gekrümmten Spiegels, der entsprechend der Windschutzscheibe angepaßt ist, kann man die Doppelbilder kompensieren (siehe Bild 1).

3.2 Korrektur einer Krümmung in der Horizontalen und einer Torsion
Bei einer Verwindung der Scheibe entsteht ein - schräges Doppelbild, das durch eine einfache Krümmung des Kompensationsspiegels nicht überlagert werden kann. Erst durch eine entsprechende Torsion des Spiegels entsteht ein korrektes Bild.

3.3 Korrektur einer gewellten Scheibe in der Horizontalen oder in der Vertikalen
Bei einer gewellten Scheibe muß der Spiegel über eine Justiereinrichtung so zu verstellen sein, daß ein gutes Bild entsteht.

3.4 Korrektur in der horizontalen und vertikalen Ebene mit Biegespiegel
Eine gleichzeitige Korrektur in der vertikalen und in der horizontalen Richtung ist mit einem Biegespiegel nicht möglich, da, sobald der Spiegel in einer Richtung gekrümmt wird, dieser sehr stabil ist und bei einer Krümmung in die Richtung senkrecht dazu starke Spannungen auftreten, die zum Bruch führen.
Es besteht die Möglichkeit der Korrektur der beiden Richtungen über zwei Spiegel, wobei einer die Vertikale, der andere die Horizontale korrigiert (siehe Bild 2), oder einen entsprechend geschliffenen Spiegel, der für beide Ebenen korrigiert ist (siehe Bild 1).

Alle in 3.2 - 3.4 aufgezeigten Korrekturmöglichkeiten können sowohl mit Planspiegeln, die entsprechend gebogen sind, oder mit entsprechend geformten Spiegeln durchgeführt werden.

Eine weitere Möglichkeit zur Korrektur ist, die Spiegel durch ein Hologramm (HOE) zu eretzen.

3.5 Holografischer Spiegel mit Korrektur in der Horizontalen oder Vertikalen

Hier wird entweder ein ebener Spiegel aufgenommen und dann entsprechend so gekrümmt, daß die Scheiben krümmung kompensiert wird, oder das Hologramm gleich mit der kompensierenden Wirkung aufgenommen wird, so daß nur noch die Toleranzen der Windschutzscheibe über eine Justiereinrichtung korrigiert werden müssen.

Zur Aufnahme eines ebenen holographischen Spiegels werden zwei ebene Wellen verwendet, die von entgegengesetzten Seiten her und symmetrisch auf die Hologrammebene treffen, so daß sie symmetrisch zur Hologrammebene liegen. Für die Rekonstruktion einer der beiden Wellenzüge muß das Hologramm lediglich mit der anderen Welle rekonstruiert werden.

3.6 Holografischer Spiegel mit Korrektur in horizontaler und vertikaler Richtung (siehe Bild 3).

3.6.1 Aufnahme von zwei Planspiegeln, die dann jeder einzeln für seine Richtung justieren kann.

3.6.2. Es werden zwei Hologramme mit kompensierender Wirkung aufgenommen, so daß nur noch die Toleranzen der Windschutzscheibe über eine Justiereinrichtung korrigiert werden müssen (siehe Bild 3).

3.6.3. Aufnahme eines Kompensationshologramms für die horizontale und vertikale Ebene. Nachteilig hierbei ist, daß eine Korrektur, die durch die fertigungsbedingten Scheibentoleranzen notwendig sein kann, nur in einer Richtung (horizontal oder vertikal) ausgeführt werden kann.

Soll eine beliebig gekrümmte Windschutzscheibe, also beispielsweise eine in zwei Ebenen gekrümmte Windschutzscheibe durch einen holographischen Kompen sationsspiegel entzerrt werden, wird ein entsprechendes holographisch-optisches Element in Form eines Reflektionshologramms dadurch hergestellt, daß ein ebener Wellenzug an der Windschutzscheibe reflektiert und auf die Hologrammebene des herzustellenden Hologramms reflektiert wird, wo diese Welle mit dem aus einem ebenen Wellenzug bestehenden Referenzstrahl interferiert. Dieses so hergestellte Hologramm wird anschließend mit einem invertierten Rekonstruktionsstrahl beaufschlagt, so daß die rekonstruierte Welle nach ihrer Reflektion an der Windschutzscheibe wieder eine ebene unverzerrte Welle ist.

Die in den Kompensationssystemen verwendeten Hologramme können Weißlichttransmissionshologramme, Weißlichtreflexionshologramme, Transmissionshologramme, verspiegelte Transmissionshologramme etc., sein.

Aus den vorangegangenen Punkten 1 bis 3, die die Möglichkeit einer Informationsdarstellung in einer festen bzw. variablen Entfernung vom Auge und die dabei nötige Kompensation der Abbildungsfehler durch die Windschutzscheibenkrümmung aufzeigen, leiten sich folgende Kombinationsmöglichkeiten ab:

**Für Head-Up-Displays mit einer Informationsdarstellung in variabler Entfernung**

1.) Konventionelles, optisches Abbildungssystem wie in 2.2 beschrieben, plus Kompensation über Spiegel (3.1 bis 3.4). Anzeige wie in 1.1 bis 1.3.

2.) Konventionelles Abbildungssystem (2.2), plus Kompensation der durch die Scheibe entstehenden Abbildungsfehler durch HOE (3.5 bis 3.6). Anzeige wie in 1.1 bis 1.3.

3.) Abbildungssystem, das aus Hologrammen besteht, wie in 2.4.3, 2.5.2 und 2.5.3 beschrieben. Zur Kompensation der Windschutzscheibenkrümmung wird ein entsprechend geformter Spiegel verwendet (3.1 bis 3.4).

4.) Abbildungssystem, wie in 2.4.3, 2.5.2 und 2.5.3 beschrieben. Zur Kompensation der Scheibenkrümmung wird ein Hologramm verwendet (3.5 bis 3.6).

5.) Abbildungssystem wie in 2.4.3, 2.5.2, 2.5.3, nur daß die durch die Scheibenkrümmung entstehenden Abbildungsfehler in der zweiten holograf ischen Linse (biokulares System) berücksichtigt werden (2.6).

**Head-Up-Displays mit Information in fester Entfernung**

1.) Optisches Abbildungssystem 2.1

Die Kompensation der durch die Windschutzscheibenkrümmung entstehenden Abbildungsfehler erfolgt wie in 3.1 bis 3.4 beschrieben. Die Anzeige erfolgt wie in 1.1 bis 1.3 beschrieben, oder kann bei statischen Anzeigen, wie Warnanzeigen, in einem Hologramm aufgezeichnet sein (1.4), wobei das Abbildungssystem entfallen kann (nur bei 1.4).

2.) Optisches Abbildungssystem 2.1
Kompensation der durch die Windschutzscheibe entstehenden Abbildungsfehler durch HOE (3.5, 3.6). Die Anzeige erfolgt wie in Display 1.).

3.) Holografisches Abbildungssystem 2.3
Kompensation erfolgt wie in 3,.1 bis 3.4 beschrieben. Die Anzeige erfolgt wie in den Display 1.) und 2.).

4.) Abbildungssystem 2.3
Zur Kompensation der Windschutzscheibenkrümmung werden HOE verwendet (3.5, 3.6). Anzeige wie in den Displays 1.), 2.) und 3.).

5.) In der holografischen Abbildungslinse wird die Korrektur der Windschutzscheibenkrümmung gleich berücksichtigt (2.6). Die Anzeige erfolgt wie in 1.), 2.), 3.), 4.).

6.) Holografische Abbildung wie in 2.4.1 und 2.5.1
Die Kompensation der Windschutzscheibenkrümmung erfolgt wie in 3.1 bis 3.4 beschrieben.

7.) Holografische Abbildung wie in 2.4.1 und 2.5.1
Die Kompensation der Windschutzscheibenkrümmung erfolgt wie in 3.5 und 3.6 beschrieben.

## Head-Down-Displays mit Information in fester Entfernung

Wegen der Fülle an Information und um dadurch den Fahrer nicht abzulenken, könnte man einen Teil der Information in einem Head-Down-Display unterbringen.

Dieses Display befindet sich, wie beim normalen Fahrzeug, im Armaturenbrett, nur mit dem Unterschied, daß die Anzeige in einem Abstand von mehreren Metern erscheint und dadurch akkommodationsfrei ablesbar ist. In diesem Display soll4en komplexere Multifunktions-Anzeigen, wie z.B. Karten und Ziffern, bei denen es auf Kontraststärke ankommt, dargestellt werden.

1.) Darstellung über ein konventionelles Abbildungssystem. Dies kann durch eine einfache Lupe (z.B. ∅ min ca. 150 mm) oder einem korrigierten System geschehen (siehe 2.1). Vergrößerung: $\Gamma \approx 250/fi$ . Die Anzeige erfolgt wie in 1.1 bis 1.3 beschrieben.

2.) Abbildung der Anzeige durch ein Abbildungssystem 2.1 oder mit einer holografischen Linse (siehe 2.3). Die Anzeige erfolgt wie in 1.1 bis 1.3.

3.) Für die Darstellung statischer Anzeigen kann man ein Hologramm verwenden. Durch Veränderung der Lage der Referenzlichtquelle kann auch die Lage und Größe der Information in einem bestimmten Bereich geändert werden (siehe 1.4).

## 4. Korrektur des transversalen Farbfehlers

Durch die Abknickung der Hauptachsen der Hologramme verhalten sich diese zunächst ähnlich wie Gitter und es kommt bei Flächenhologrammen (Transmissionshologramme, verspiegelte Transmissionshologramme) bei der Rekonstruktion mit Weißlich zu einem transversalen Farbfehler.

Außerdem wird die Strahlung mit der größeren Wellenlänge auch infolge der endlichen Brechkraft der holografischen Linse stärker gebeugt. Dies führt bei größer werdenden Wellenlängen zu immer kürzeren Brennweiten der Linse und damit zu einem longitudinalen Farbfehler.

Beide Farbfehler zusammen sorgen dafür, daß ein Objektprodukt auf eine schräg zur Linse liegende Kurve abgebildet wird. Dabei ist der transversale Farbfehler im allgemeinen wesentlich stärker als der longitudinale.

Eine einzelne holografische Linse dieses Hologrammtyps ist daher nur für monochromatische Strahlung verwendbar. Diese könnte entweder durch eine Laserdiode, mit einer gefilterten Weißlichtquelle oder einer schmalbandigen Lichtquelle erzeugt werden.

Eine Korrektur über einen großen Spektralbereich kann durch ein zweites Hologramm geschehen, vorzugsweise ein einfaches Gitter, welches parallel zum ersten Hologramm steht und durch eine gegenläufige Abknickung des Hauptstrahls den transversalen Farbfehler korrigiert. In unserem Fall kann als zweites Hologramm auch das für die Korrektur der Vertikalen verwendet werden (siehe Bild 3).

Anstatt eines Gitters kann auch ein Prisma mit genau entgegengesetzter Dispersion verwendet werden (Bild 13c).

## 5. Anpassung des Head-Up-Displays an die Fahrergröße

Dadurch, daß das Sehfeld eines Head-Up-Displays begrenzt ist, muß die Anzeige individuell an die Größe des Fahrers angepaßt werden. D.h. der aus dem System austretende Hauptstrahl muß genau auf Augenhöhe des Fahrers sein, da sonst eine starke Einengung des Sehfeldes auftritt, was den Verlust des sterioskopischen Sehens zur Folge haben kann.

Die Anpassung des Hauptstrahls an die Augenhöhe geschieht durch eine Höhenverstellung des Abbildungssystems samt der Informationsdarstellung (siehe Bild 14), oder durch eine Sitzhöhenverstellung.

Bei einer Kombination von Abbildung und Kompensation der Scheibenkrümmung wie in 2.5 kann die Anpassung des Hauptstrahls auf die Augenhöhe nur durch eine Sitzhöhenverstellung erreicht werden, da bei einer Verstellung des Abbildungssystems gleichzeitig die Kompensationswirkung verändert wird.

Eine weitere Möglichkeit der Anpassung kann auch durch Kippen des Abbildungssystems samt der Informationsdarstellung geschehen. Nachteil hierbei ist, daß das Bild der Information nicht in der Höhe des Fahrers erscheint, da sich der Einfallswinkel des Hauptstrahls auf die Frontscheibe ändert (siehe Bild 15).

## 6. Erhöhung des Reflexionsgrades und Kompensation der Doppelreflexion in der Windschutzscheibe

Ein großes Problem, was die Abbildung durch Reflexion an der Windschutzscheibe angeht, wirft der geringe Reflexionsgrad und die Doppelreflexion des Lichts an Vorder-und Hinterfläche der Scheibe auf. Bei senkrechtem Lichteinfall würden die beiden entstehenden Bilder hintereinanderliegen, so daß nur das vordere Bild gesehen wird. Da die Information aber von schräg unten projiziert wird, wird das Bild der Vorderfläche unter dem der Hinterfläche wahrgenommen.

Kompensiert kann diese Doppelreflexion dadurch werden, daß man mit polarisiertem Licht im Brewsterwinkel (ca. 56°) projiziert. Das Licht muß so polarisiert sein, daß man an der Vorderfläche der Windschutzscheibe den maximalen Reflexionsgrad (bis zu 30 %) erreicht, d.h. es muß senkrecht zur Einfallsebene schwingen (⇒ geringste Transmission).

In der Scheibe wird neben oder anstatt der Verbundfolie eine polarisationsdrehende Folie eingebracht. Diese Folie dreht die Polarisation ds transmittierenden Lichts um 90°, so daß man an der Rückfläche der Scheibe nahezu keine Reflexion hat und daher kein Doppelbild. Das Ganze funktioniert auch umgekehrt.

Das Licht muß dann so polarisiert werden, daß an der Vorderfläche der Scheibe keine Reflexion entsteht (⇒ ca. 100 % Transmission). Durch die polarisationsdrehende Folie wird die Polarisation wieder um 90° gedreht; an der Rückfläche der Scheibe erhält man eine mayimale Reflexion und eine minimale Transmission.

## Vorteile von HOE gegenüber konventioneller Optik

- Leichter
- Eventuell kürzerer Strahlengang durch verringerte Baulänge des Abbildungssystems und durch unkonventionelle Strahlführung
- Billige Massenproduktion als Prägehologramm
- Bei Informationen, die in einem festen Abstand vom Fahrer angezeigt werden, können diese im Hologramm aufgezeichnet werden, d.h. man kann auf eine LDC bzw. CRT verzichten und somit Kosten und Platz sparen
- Korrektur der Abbildungsfehler bei Abbildungssystemen mit großem Öffnungsverhältnis ist einfacher als mit konventioneller Optik
- Bei einer Kompensation der Windschutzscheibenkrümmung kann die Korrektur für die vertikale und die horizontale Ebene in einem HOE untergebracht sein, und gleichzeitig können die Fertigungstoleranzen der Windschutzscheibe für eine Ebene nachkorrigiert werden, was bei einem für beide Richtungen korrgiertem Spiegel nicht möglich ist.

Ausführungsbeispiele der Erfindung werden nachstehend anhand der Zeichnung näher erläutert. In dieser zeigt

Fig. 1 einen Vertikalschnitt durch ein in einem Kraftfahrzeug angeordnetes virtuelles Anzeigesystem mit Spiegelung auf der Innenseite der Frontscheibe in schematischer Darstellung,

Fig. 1a eine Draufsicht auf das optische Abbildungssystem nach Fig. 1,

Fig. 1b einen Vertikalschnitt durch eine zylindrisch gekrümmte Windschutzscheibe mit schräg liegender Achse und einem vertikalen Schnitt durch einen entsprechend, aber mit kleinerem Krümmungsradius, gekrümmten Kompensationsspiegel,

Fig. 1c einen Horizontalschnitt durch das aus einer gekrümmten Windschutzscheibe mit Kompensationsspiegel bestehende Korrektursystem,

Fig. 1d einen Horizontalschnitt durch eine Windschutzscheibe mit sich änderdem Krümmungsradius in schematischer Darstellung,

Fig. 1e ein der Fig.1b entsprechender Vertikalschnitt durch eine Windschutzscheibe mit Krümmung um eine horizontale Achse mit entsprechender Spiegelkompensationsoptik,

Fig. 1f eine der Fig. 1e entsprechende Darstellung mit sich änderdem Krümmungsradius der Windschutzscheibe mit entsprechendem Kompensationsspiegel,

Fig. 2 einen Vertikalschnitt durch eine zweite Ausführungsform eines in einem Kraftfahrzeug angeordneten virtuellen Anzeigesystems mit Spiegelung an der Frontscheibe in schematischer Darstellung,

Fig. 2a eine Draufsicht auf das optische Anzeigesystem nach Fig. 2,

Fig. 3 eine den Fig. 1 und 2 entsprechende Darstellung eines dritten virtuellen Anzeigesystems,

Fig. 3a eine Draufsicht auf das optische Anzeigesystem nach Fig. 3,

Fig. 4 ein viertes Ausführungsbeispiel eines virtuellen Anzeigesystems,

Fig. 4a eine Draufsicht auf das optische Anzeigesystem nach Fig. 4,

Fig. 5 die schematische Darstellung eines Informationssystems, bei dem die jeweils anzuzeigende Information durch ein LCD gebildet wird,

Fig. 6 eine schematische Darstellung der Bildung einer variablen Information, beispielsweise eines Warnbalkens, in unterschiedlichen Entfernungen,

Fig. 7 ein optisches System zur Bildung einer von einer LCD-Platte abgeleiteten Information in schematischer Darstellung,

Fig. 8a Informationsbildung mit Hilfe eines Hologramms in unterschiedlichen Entfernungen,

Fig. 8b schematisch die Darstellung der Erzeugung eines reellen Zwischenbildes gemäß Fig. 8a,

Fig. 9 schematisch die Darstellung der Schaffung der Information durch sogenannte Multiplexhologramme,

Fig. 10 eine der Fig. 9 entsprechende Darstellung der Informationsbildung mit Multiplexhologrammen in zweistufiger Abbildung,

Fig. 11a einen Vertikalschnitt durch ein Kraftfahrzeug mit einem virtuellen, im Bereich des Armaturenbretts angeordnetem Anzeigesystem mit der Möglichkeit akkommodationsfreier Ablese,

Fig. 11b eine schematische Darstellung des Informationsgebers des optischen Systems nach Fig. 11a,

Fig. 12 eine zweite Ausführungsform eines im Armaturenbrett angeordneten Anzeigesystems mit virtueller Anzeige de Information,

Fig. 13a eine schematische Darstellung der Kompensation des bei Flächenhologrammen auftretenden transversalen Farbfehlers bei einem sich in der Frontscheibe spiegelnden Anzeigesystem,

Fig. 13b eine schematische Darstellung eines Kompensationsbeispiels gemäß Fig. 13a,

Fig. 13c ein weiteres Beispiel zur optischen Kompensation des transversalen Farbfehlers mittels eines Prismas,

Fig. 14 Anpassung des sich in der Frontscheibe spiegelnden Bildes bei unterschiedlicher Kopfhöhe des Fahrers,

Fig. 15 eine schematische Darstellung einer weiteren Anpassung des Strahlenganges der Anzeige an unterschiedliche Kopfhöhen des Fahrers und

Fig. 16 einen Schnitt durch eine Frontscheibe mit eingelegter polarisationsdrehender Folie.

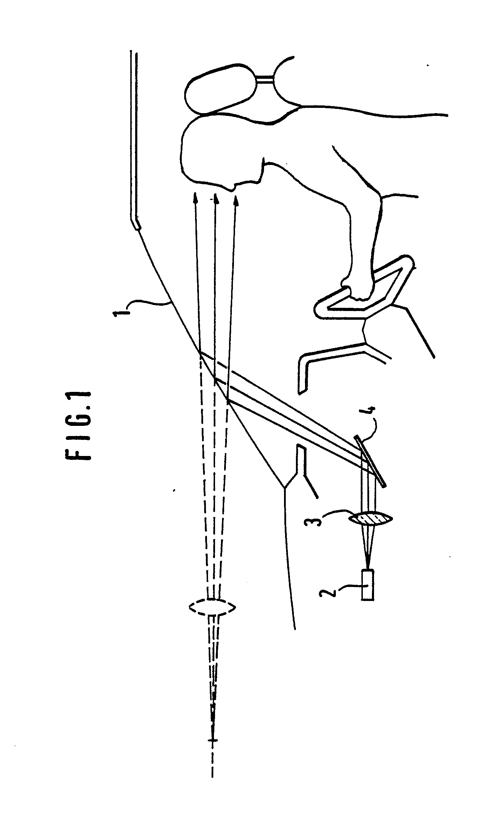

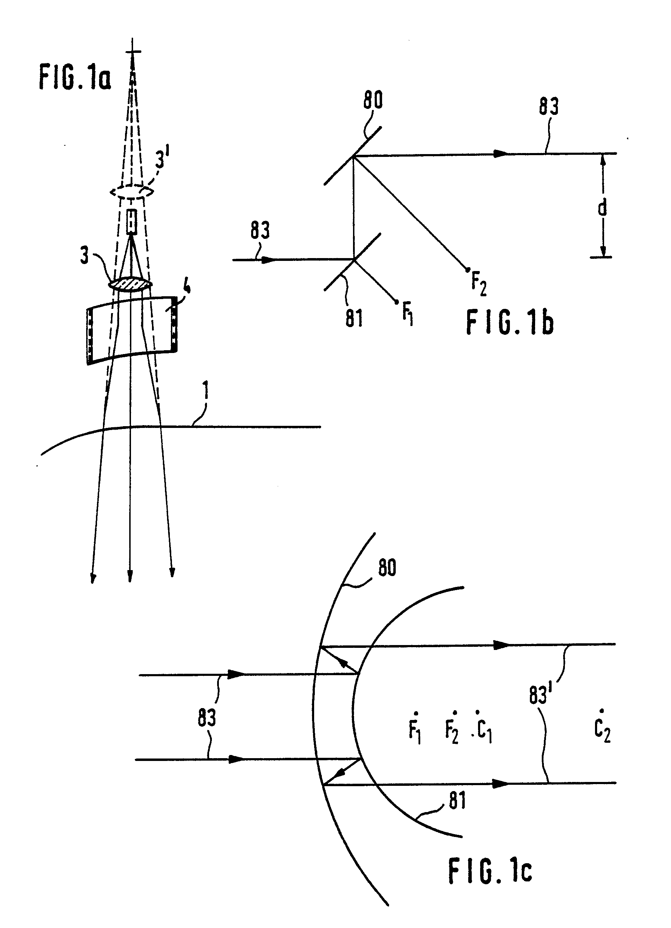

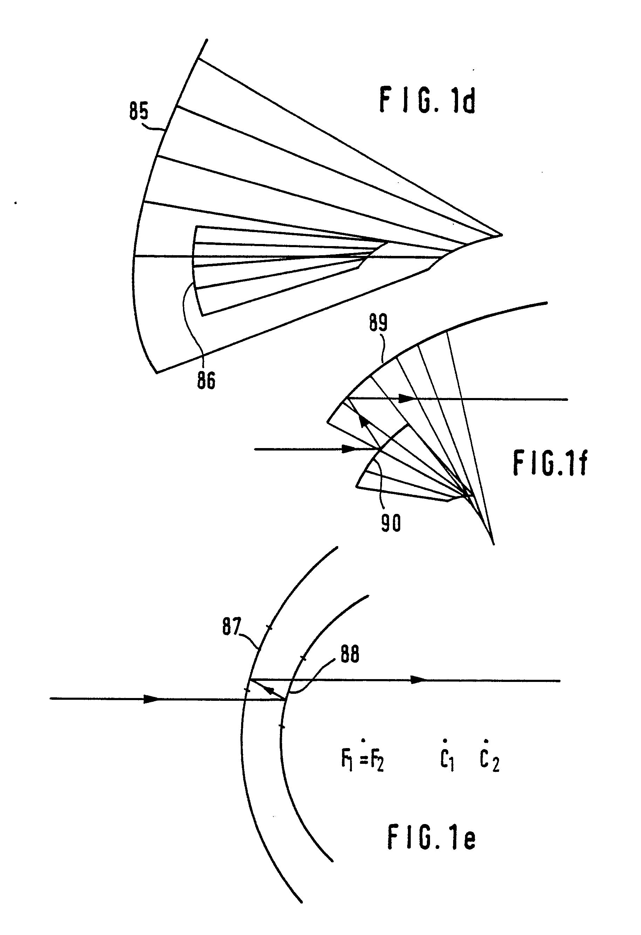

Bei dem in Fig. 1 schematisch dargestellten virtuellen Anzeigesystem ist unterhalb der Windschutzscheibe 1 etwa im Bereich des Armaturenbrettes eine Einheit 2 vorgesehen, die die auszugebende Information bildet. Mit der Linse 3 ist allgemein ein optisches System dargestellt, das die von der Einheit 2 ausgegebene Information in die Windschutzscheibe 1 über ein spiegelndes Element 4 einspiegelt.

Da die Windschutzscheibe in beiden Ebenen üblicherweise gekrümmt ist, wird ein in dieser gespiegeltes Bild verzerrt. Um eine verzerrungsfreie Darstellung der ausgegebenen und gespiegelten Information zu ermöglichen, erfolgt eine der Krümmung der Windschutzscheibe 1 entsprechende Kompensation durch das spiegelnde Element 4. Bei diesem kann es sich entweder um einen entsprechend gegensinnig gekrümmten Spiegel, einen geschliffenen Spiegel oder aber auch ein Hologramm handeln, wie nachstehend noch näher erläutert werden wird.

Durch die Abbildungsoptik 3 erscheint die von der Einheit 1 ausgegebene Information als virtuelles Bild im Blickfeld des Fahrers, und zwar biokular durch deren entsprechende Größe. Weiterhin läßt sich die ausgegebene Information, wie in Fig. 1 gestrichelt dargestellt, im Blickfeld des Fahrers in akkommodationsfreier Entfernung darstellen.

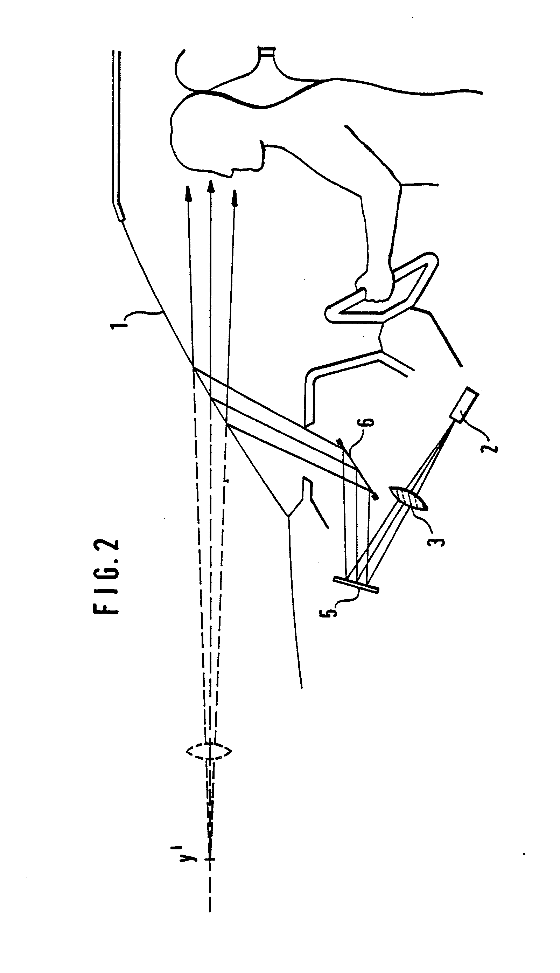

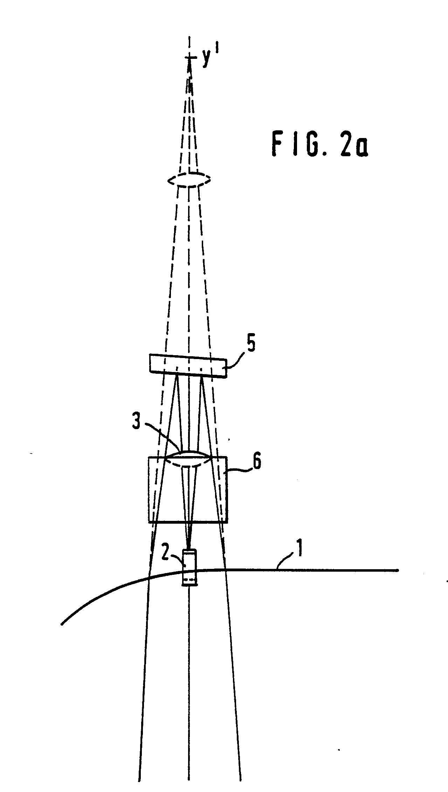

Das anhand der Fig. 1 und 2 dargestellte optische System zeigt praktisch die Betrachtung eines beleuchteten oder selbstleuchtenden Informationsträgers durch eine Lupe. Befindet sich das durch die Lupe betrachtete Objekt im Brennpunkt oder in der Nähe des Brennpunkts der Abbildungsoptik, ist eine akkommodationsfreie oder nahezu akkommodationsfreie Betrachtung möglich. Um eine virtuelle Darstellung der Information zu haben, muß die anzuzeigende Information sich innerhalb der Brennweite der Abbildungsoptik befinden, also in bezug auf die Abbildungsoptik vor deren Brennpunkt liegen.

Aus Fig. 2 ist ein Abbildungssystem ersichtlich, das seinem grundsätzlichen Aufbau nach dem nach Fig. 1 entspricht. Nur sind zwei Kompensationsspiegel 5, 6 vorgesehen, und zwar ein Spiegel zur Kompensation der vertikalen Verzerrung und der andere Spiegel zur Kompensation der horizontalen Verzerrung aufgrund der entsprechenden Krümmungen der Windschutzscheibe.

Die gewünschte Kompensation könnte grundsätzlich auch, wie anhand der Fig. 1 dargestellt, durch einen Spiegel erfolgen. Die Aufteilung der Kompensation auf zwei Spiegel ermöglicht aber eine leichtere Herstellung und möglicherweise auch Nachstellung der Spiegel. Beispielsweise läßt sich eine gewünschte Nachjustierung durch eine später erfolgende stärkere oder schwächere Krümmung eines Kompensationsspiegels erreichen, mit dem sich dieser nachträglich noch auf die besondere Ausgestaltung der Windschutzscheibe anpassen läßt.

Bei dem optischen Anzeigesystem nach Fig. 2 erscheint die virtuelle Anzeige für den Fahrer in dem Punkt Y'. Y' stellt einen Bildpunkt der angezeigten Information dar.

Anhand der Fig. 1b und 1c wird die Korrektur beschrieben, die infolge einer zylinderschalenförmig gekrümmten Windschutzscheibe entsteht. Mit 80 ist ein Schnitt durch eine schwach zylindrisch gekrümmte Windschutzscheibe dargestellt, deren Brennpunkte auf einer zu dem Schnitt 80 parallelen Linie liegen würden. Mit F2 ist ein Brennpunkt dieser Brennlinie dargestellt.

Im Abstand unterhalb der Windschutzscheibe 80 ist ein ebenfalls zylindrisch gekrümmter Kompensationsspiegel angeordnet, der allerdings eine stärkere Krümmung aufweist als die Windschutzscheibe 80 und deren Brennlinie parallel zu der Brennlinie der Windschutzscheibe 80 verläuft. Mit F1 ist wiederum ein Brennpunkt der Brennlinie des Kompensationsspiegels 1 bezeichnet.

83 ist ein Strahl eines von der Informationslichtquelle kommenden Strahlenbündels, der in der dargestellten Weise an dem Kompensationsspiegel und der Windschutzscheibe gespiegelt wird und als unverzerrter Lichtstrahl 83' aus dem System austritt. Aus Fig. 1c ist ersichtlich, daß die Strahlen 83 und 83 zueinander parallel sind, so daß die Bilder durch Spiegelung in der Windschutzscheibe keine Verzerrung erfahren. Allerdings ergibt sich, wie aus Fig. 1c ersichtlich, eine Vergrößerung des Bildes.

Grundsätzlich wird beim Einspiegeln der die Information enthaltenden Lichtstrahlen in die zylindrisch gekrümmte Windschutzscheibe das Bild verformt und es kommt beim beidäugigen Sehen zu Doppelbildern und Verzerrungen.

Mit dem Biegespiegel 81 wird diese Verzerrung in der beschriebenen Weise korrigiert. Für eine Korrektur der Abbildungsfehler durch die Windschutzscheibe muß der Biegespiegel so geformt werden, daß er mit der Windschutzscheibe ein afokales System bildet. Bei der in den Fig. 1b und 1c dargestellten konstanten Krümmung der Windschutzscheibe in nur einer Ebene, nämlich der horizontalen, wird ein afokales System dadurch gebildet, daß der Abstand d zwischen dem Spiegel 81 und der Windschutzscheibe 80 gleich der Summe der beiden Einzelbrennweiten beträgt:

$$d = |\, f_1 + f_2 \,|$$

$f_1$ = Brennweite des Kompensationsspiegels 81 (negativ)

$f_2$ = Brennweite der einachsig gekrümmten Windschutzscheibe (positiv)

Die Punkte C1 und C2 sind die geometrischen Krümmungsachsen des Kompensationsspiegels 81 und der Windschutzscheibe 80.

Die Brennweite des Kompensationsspiegels 81 entspricht somit der Differenz zwischen der Brennweite der Windschutzscheibe und dem Abstand des Kompensationsspiegels von der Windschutzscheibe.

Dabei werden die Abstände auf dem Strahlengang des jeweiligen Strahles gemessen.

Fig. 1d ist eine der Fig. 1c entsprechende Darstellung, aber mit der Abweichung, daß sowohl die Windschutzscheibe 85 als auch dementsprechend der Kompensationsspiegel 86 eine sich ändernde Krümmung aufweisen. Bei einem derartigen veränderten Krümmungsverlauf der Windschutscheibe, wie sie meist üblich ist, muß die Krümmung des Biegespiegels 86 der Krümmung der Windschutzscheibe 85 entsprechend angepaßt werden, und zwar so, daß der Vergrößerungsfaktor des afokalen Systems konstant bleibt. Dieser Faktor ergibt sich aus dem Verhältnis der beiden Brennweiten $\beta' = |\, f'_2 : f'2 \,|$, wobei f'2 die veränderliche Brennweite der Windschutzscheibe und f'1 die veränderliche Brennweite des Kompensationsspiegels ist. Die Krümmung C des Kompensationsspiegels läßt sich aus der Beziehung $C = \dfrac{2 f_2}{\beta'}$ errechnen. Diese Korrektur einer beliebig gekrümmten Windschutzscheibe mit einem Biegespiegel kann jeweils exakt nur für eine Krümmung der Scheibe vorgenommen werden, da sich auch der Abstand des Biegespiegels zu der Windschutzscheibe mit den Krümmungsradien bzw. den Brennweiten ändert. Der Abstand zwischen der Windschutzscheibe und dem Kompensationsspiegel wird so gewählt, daß er für eine Krümmung zwischen zwei Extremwerten des benutzten Bereiches der Scheibe stimmt. Letztlich läßt sich die richtige Anpassung des Kompensationsspiegels zu der Windschutzscheibe nur durch entsprechende Optimierung vornehmen.

Fig.1e zeigt einen Vertikalschnitt durch eine um eine horizontale Achse zylindrisch gekrümmte Windschutzscheibe mit einem entsprechend angepaßten Kompensationsspiegel 88. Für die Korrektur an dieser Vertikalen müssen die Brennlinien der Windschutzscheibe und des Kompensationsspiegels, von denen jeweils nur die Brennpunkte $f_1$ und $f_2$ dargestellt sind, aufeinander liegen.

Fig. 1f zeigt einen Vertikalschnitt durch eine Windschutzscheibe 89, die um eine horizontale Achse mit sich änderndem Krümmungsradius gekrümmt ist. Der zugehörige Kompensationsspiegel 90 ist entsprechend gekrümmt.

Bei der Korrektur von Flächen mit veränderlichem Krümmungsverlauf muß die Krümmung des Biegespiegels wieder so gewählt werden, daß der Vergrößerungsfaktor konstant bleibt. Die Krümmungen und Abstände des Kompensationsspiegels 90 von der Windschutzscheibe ist so zu berechnen und zu wählen, daß sich bei konstantem Vergrößerungsfaktor ein verzerrungsfreies Bild ergibt.

Bei einer Krümmung der Windschutzscheibe um 2 Achsen besteht die Möglichkeit der Korrektur zur Erzeugung verzerrungsfreier Bilder über zwei Biegespiegel, bei denen jeweils die Bedingungen für die horizontale und vertikale Kompensation einzuhalten sind. Statt zweier Biegespiegel kann auch ein entsprechend sphärisch gekrümmter Spiegel verwendet werden, der entsprechend der gewünschten Kompensation Krümmungen in beiden Richtungen aufweist.

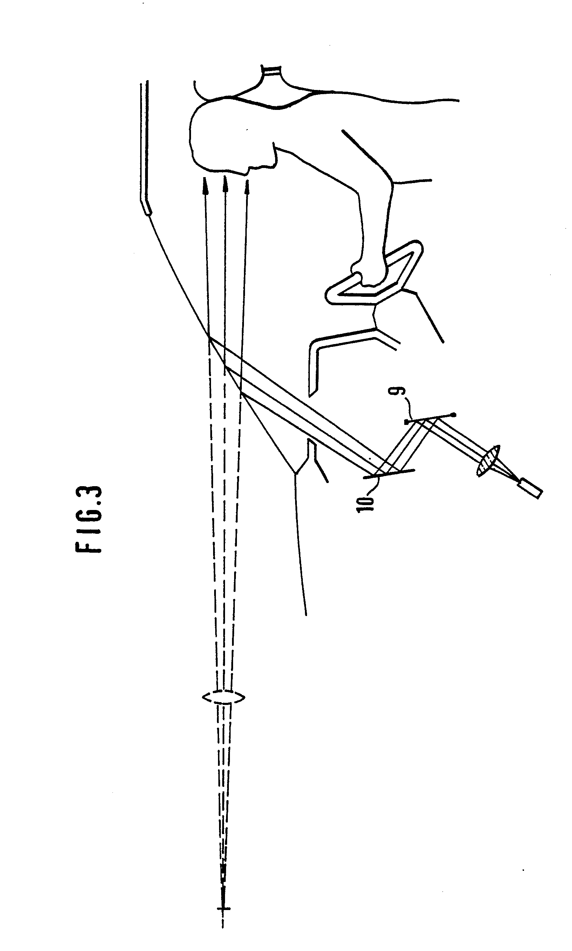

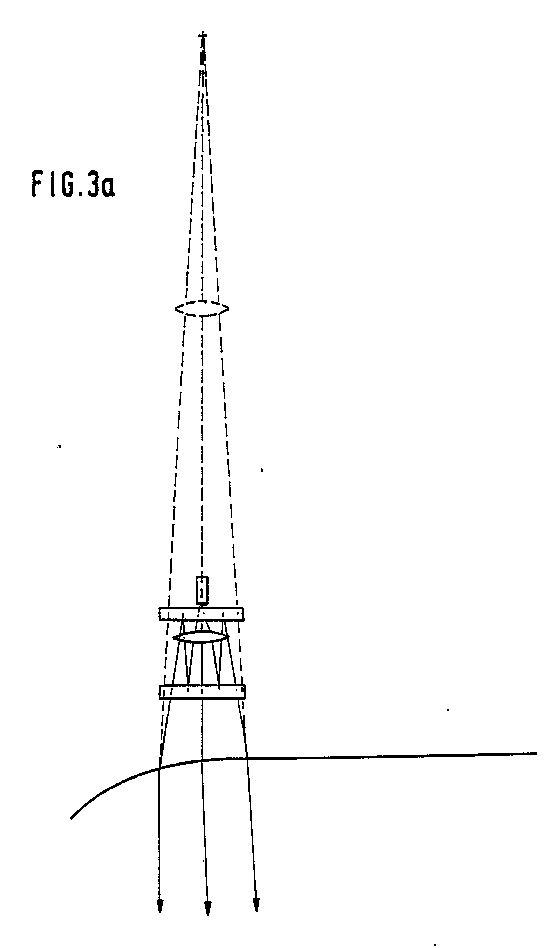

In Fig. 3 ist ein optisches System zur virtuellen Anzeige einer Information dargestellt, bei dem die Kompensation des durch die Windschutzscheibe verzerrten Spiegelbildes durch zwei Hologramme 9, 10 erfolgt, die so zueinander gestellt sind, daß neben der Entzerrung des Spiegelbildes auch eine Kompensation des transversalen Farbfehlers erfolgt.

Bei diesen Hologrammen handelt es sich um verspiegelte Transmissionshologramme, die parallel zueinander in der Weise angeordnet sind, daß der an dem ersten Hologramm auftretende Farbfehler durch das zweite Hologramm kompensiert wird. Die Farbfehler bei den Hologrammen ergeben sich aus der Dispersion durch Beaufschlagung mit Weißlicht. Der an dem ersten Hologramm entstehende Farbfehler wird durch entsprechende Ausgestaltung und Anordnung des zweiten verspiegelten Transmissionshologramms kompensiert.

Die die Krümmungen in zwei Ebenen der Windschutzscheibe kompensierenden Hologramme 9, 10 lassen sich einfacher herstellen als entsprechend gekrümmte oder geschliffene Spiegel, weil sich die Hologramme, wenn einmal die Gitterstruktur berechnet worden ist, in einfacher Weise kopieren oder vervielfältigen lassen. Wird für die Hologramme beispielsweise ein Master für ein Prägeverfahren hergestellt, lassen sich die zur Anwendung kommenden verspiegelten Transmissionshologramme wirtschaftlich als Massenprodukte herstellen.

Der anhand der Fig. 3 erläuterte Aufbau muß nicht unbedingt aus verspiegelten Transmissionshologrammen bestehen. Eine entsprechende Wirkung kann auch durch die Hintereinanderschaltung von Transmissionshologrammen erreicht werden.

Letztlich kann zur Kompensation der Krümmung der Windschutzscheibe jeder Hologrammtyp mit entsprechender Kompensationscharakteristik verwendet werden.

Werden Reflexionshologramme verwendet, ergibt sich für die Darstellung der Information ein monochromatisches Bild. Bei Reflexionshologrammen werden alle Farben bis auf die, auf die die Hologramme ausgelegt sind, absorbiert.

Ist eine mehrfarbige Darstellung erwünscht, werden entsprechende Flächenhologramme eingesetzt.

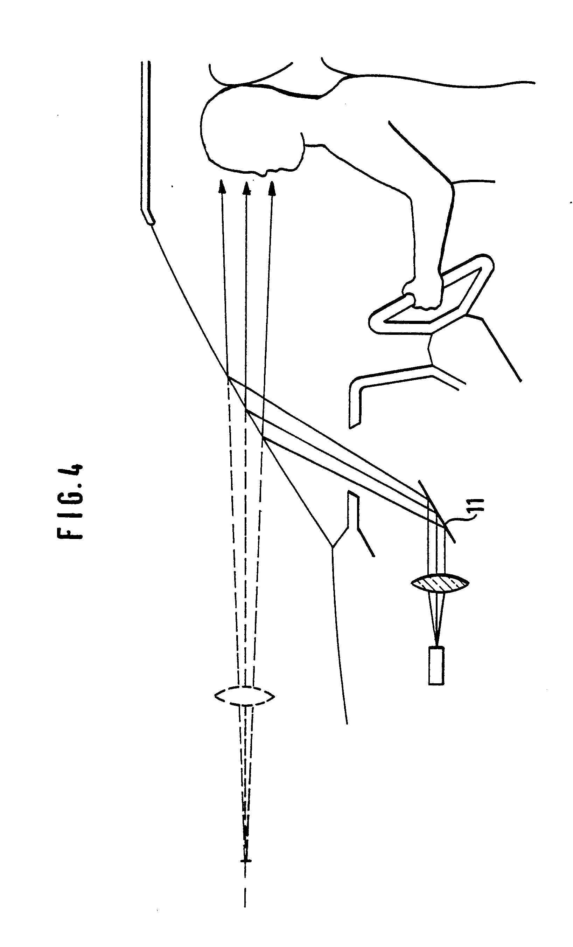

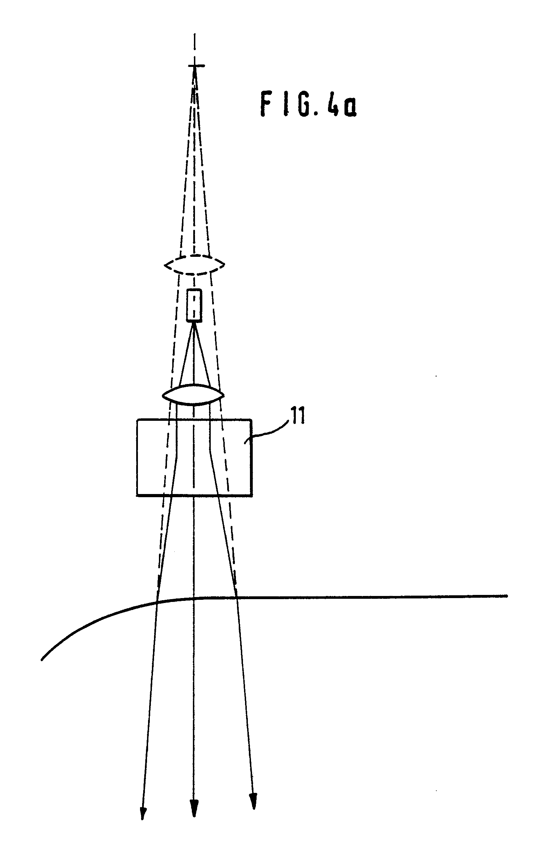

In Fig. 4 ist ein in der Fig. 1 entsprechendes Abbildungssystem mit Kompensation der Windschutzscheibenkrümmung dargestellt, bei der jedoch im Gegensatz zu dem Ausführungsbeispiel nach Fig. 1 kein sphärisch gekrümmter Spiegel vorgesehen ist, sondern ein Kompensationshologramm 11. Dieses Kompensationshologramm 11 ist für beide Ebenen ausgelegt. Bei diesem Kompensationshologramm handelt es sich um ein Weißlichtreflektionshologramm, bei dem keine Farbkompensation erforderlich ist.

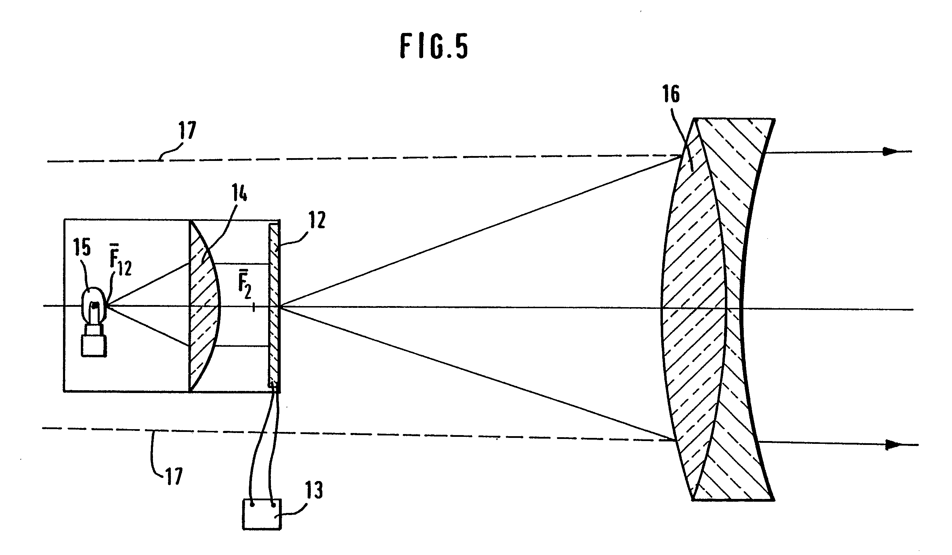

Aus Fig. 5 ist ein System zur Bildung und Einspeisung einer Information in den Strahlengang ersichtlich. Die Information wird durch ein LCD (Liquid Cristal Display) 12 gebildet, das praktisch wie ein Dia in dem Strahlengang angeordnet ist. Durch entsprechende Beaufschlagung der Segmente des LCD lassen sich unterschiedliche Informationen über die Steuereinheit 13 ausgeben. Das LCD 12 wird durch die Weißlichtquelle 15, beispielsweise eine Lampe, und die Kollimatorlinse 14 und einer vor dem LCD stehenden Mattscheibe oder einer Ausleuchtung, die der eines Diaprojektors entspricht, ausgeleuchtet. Zur Betrachtung der in dem LCD 12 gespeicherten Information dient die okulare Abbildungsoptik 16, die im dargestellten Ausführungsbeispiel aus einer achromatischen Linsenkombination besteht. Das virtuelle Bild erscheint für den Betrachter im Schnittpunkt der gestrichelten Linien 17.

Das in Fig. 5 dargestellte Abbildungssystem dient zur Darstellung der in dem LCD 12 enthaltenen Information in einer festen Entfernung.

Die Lichtquelle 15 kann eine Halogenlampe sein, die die in dem LCD geschaffene Information über die Kollimatorlinse 14 und der Mattscheibe 18 ausleuchtet. Das Abbildungssystem 16 dient der virtuellen Abbildung der Information. Das Abbildungssystem enthält den langbrennweitigen Achromaten 16 mit einem Durchmesser von beispielsweise 150 mm, der ein beidäugiges Sehen der Information erlaubt.

Anhand der Fig. 6 wird ein Abbildungssystem für eine Abbildung der Information, im dargestellten Ausführungsbeispiel ein im Spalt erscheinender Lichtbalken, in variablen Entfernungen erläutert. Eine Lichtquelle 20 leuchtet über die Kollimatorlinse 21 und die Mattscheibe 22 die Spaltblende 23, deren Spalt die anzuzeigende Information ist, aus.

Der Lichtbalken, der der Anzeige dient, kann auch durch eine sogenannte Soffitte erzeugt werden.

Das Abbildungssystem ist in dem dargestellten Ausführungsbeispiel zweistufig. Durch die Sammellinse 24 wird ein reelles Zwischenbild 25 des Spalts 26 erzeugt. Die Abbildungsoptik 27 schafft von dem reellen Zwischenbild 25 ein virtuelles Bild.

Die Spaltblende 23 mit dem der als Information dienenden Spalt 26 läßt sich in Richtung des Doppelpfeils B durch eine nicht dargestellte Verstellmechanik verschieben, so daß das reelle Zwischenbild 25 des Spalts an unterschiedlichen Stellen erscheint und der Betrachter das virtuelle Bild des Spalts in unterschiedlichen Entfernungen sieht.

Die dadurch in Form eines Spalts dargestelle Information kann in günstiger Weise dem Fahrer einen Aufschluß über die Länge des Bremsweges geben. Die Entfernung kann nämlich so auf ein im Blickfeld des Fahrers liegendes Objekt, beispielsweise ein vor ihm fahrendes Kraftfahrzeug, eingestellt werden, daß der Spalt immer in einer Entfernung erscheint, die der Länge des jeweiligen Bremsweges entspricht. Das bedeutet, daß der Bremsweg größer als ein mögliches Hindernis ist, wenn der Balken für den Fahrer hinter diesem erscheint.

Durch das Zusammenlegen der beiden Brennpunkte F′ der ersten Linse 24 und $\bar{F}$ der zweiten Linse 27 erhält man bei einer Abbildung des Objekts in Form des Spalts 26 in verschiedenen Entfernungen einen Sehwinkel σ , der dem Sehwinkel bei der Betrachtung des realen Objekts in dieser Entfernung entspricht. Das heißt, der Vergrößerungsmaßstab bleibt für jede Entfernung gleich.

Das Objekt, nämlich der Spalt 26, ist in Richtung des Doppelpfeils A horizontal verschiebbar. Um das virtuelle Bild A″ nahe erscheinen zu lassen, kann das Objekt bis auf eine Entfernung, die der Brennweite der Linse 24 entspricht, an die Linse 24 herangeschoben werden. Soll das Bild weitentfernt erscheinen, muß das Objekt, nämlich der Spalt 26, von der Linse 24 entfernt werden.

Um bei der Abbildung in eine große Entfernung einen möglichst geringen Verschiebeweg des Objekts zu erhalten, muß das Brennweitenverhältnis der Linsen 24, 27 möglichst klein gewählt werden.

Anhand von Fig. 7 wird eine grundsätzlich der Abbildungsoptik gemäß Fig. 6 entsprechende Optik dargestellt, bei der es aber nicht mehr erforderlich ist, das Objekt in Längsrichtung zu verschieben, um es in unterschiedlichen Entfernungen erscheinen zu lassen. Bei dem Abbildungssystem nach Fig. 7 besteht das Objekt aus einem schräg in dem Strahlengang angeordneten LCD 30, mit Mattscheibe dessen parallel zueinander verlaufende Balken darstellenden Segmente über die Platte verteilt sind. Um den Balken wandern zu lassen, wird über die Ansteuerung 32 ein entsprechendes Segment des LCD angesteuert.

Im Ausführungsbeispiel nach Fig. 7 sind zwei angesteuerte Segmente 31, 31′ dargestellt, die sich in den Endbereichen des LCD befinden und daher in unterschiedlichen Entfernungen für den Betrachter erscheinen. Die Bildpunkte des Balkens 31 erscheinen als virtuelles Bild für den Betrachter im Schnittpunkt der gestrichelten Linien 33. Entsprechend sieht der Betrachter die Bildpunkte des Balkens 31′ im Schnittpunkt der strichpunktierten Linien 33′. Aus der Darstellung der Strahlengänge ist ohne weiteres ersichtlich, daß der Betrachter die Balken in unterschiedlicher Entfernung und auch in unterschiedlicher Höhe sieht.

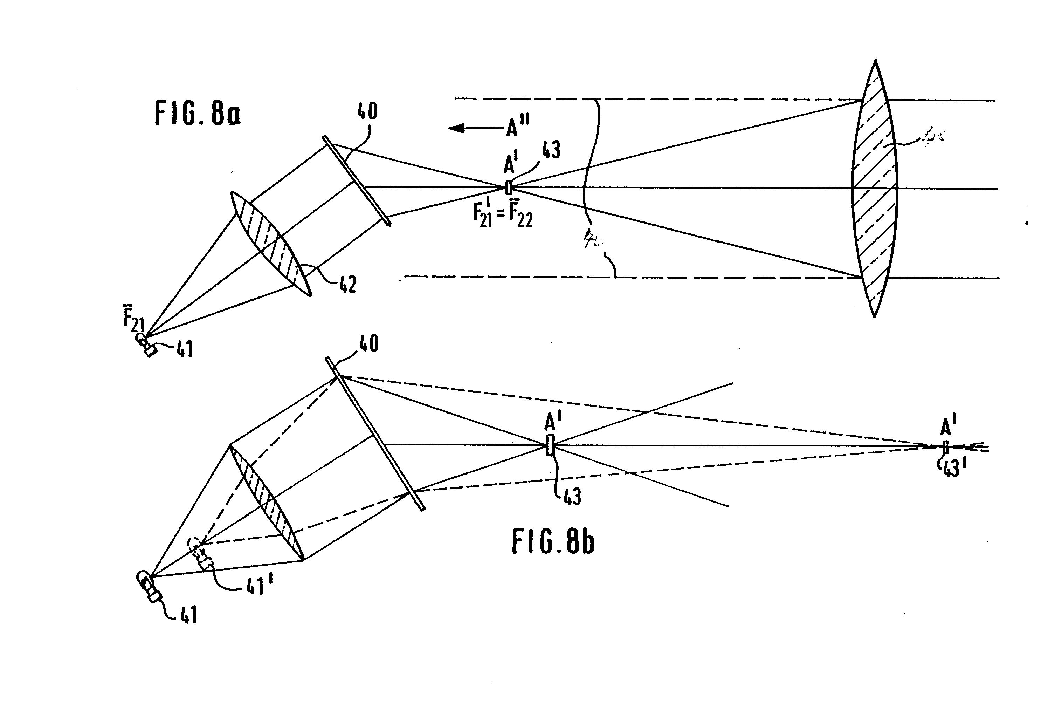

Bei dem Ausführungsbeispiel nach Fig. 8a und 8b ist die anzuzeigende Information in dem Transmissionshologramm 40 gespeichert. Das in dem Transmissionshologramm 40 gespeicherte Bild wird durch die Weißlichtquelle 41 und die Kollimatorlinse 42 reell im Punkte 43 rekonstruiert. Die Lage des aus dem Hologramm 40 rekonstruierten reellen Bildes 43 läßt sich entweder durch Bewegung der Lichtquelle 41 oder der Kollimatorlinse 42 verändern. Durch das Okular 45 erscheinen sodann die Bildpunkte des aus dem Hologramm 40 rekonstruierten reellen Bildes 43 im Schnittpunkt der gestrichelten Linien 46. Aus Fig. 8b ist ersichtlich, wie sich beispielsweise durch Verschiebung der Lichtquelle 41 das in dem Hologramm gespeicherte Bild einmal an der Stelle 43 und zum andern an der Stelle 43′ rekonstruieren läßt.

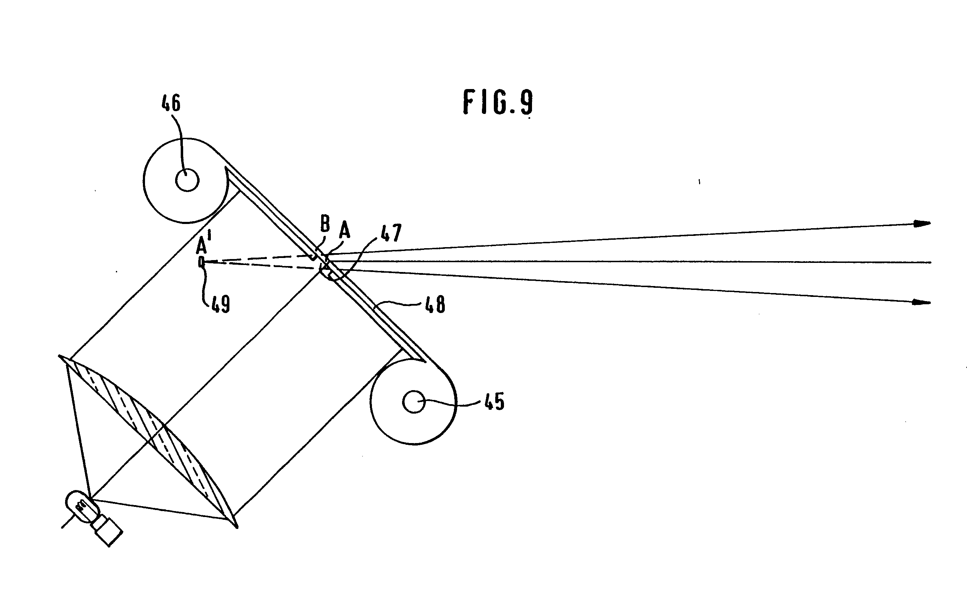

Aus Fig. 9 ist die Speicherung der Information in einem Multi plexhologramm ersichtlich. Verschiedene Hologramme mit unterschiedlichen Informationen sind streifenförmig auf einem Film angeordnet, der auf die Spulen 45, 46 aufgewickelt ist. Um in dem Blendenspalt 47 den gewünschten Hologrammabschnitt zu haben, sind die Spulen 45, 46 mit entsprechenden Antrieben versehen, die den gewünschten gesteuerten Transport des Films 48 bewirken.

Bei dem auf dem Film 48 gespeicherten Hologramm handelt es sich um ein Transmissionshologramm, und zwar ein Weißlichttransmissionshologramm, wobei die in dem Film gespeicherten Informationen im Punkt 49 virtuell rekonstruiert werden. Der Betrachter sieht die gespeicherten Informationen in unterschiedlicher Entfernung entsprechend den in dem Multiplexhologramm gespeicherten Bildinformationen. Bei diesem Ausführungsbeispiel wird für jede darzustellende Entfernung beispielsweise eines Bremsbalkens ein besonderer Abschnitt des Multiplexhologramms benötigt.

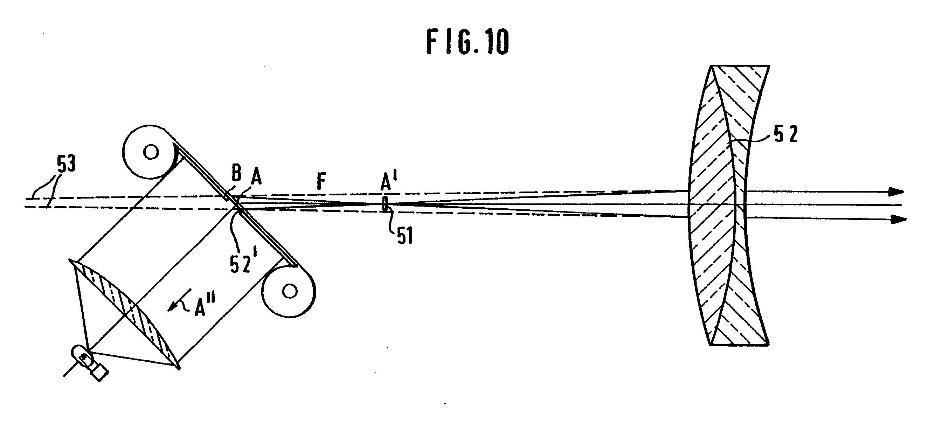

Aus Fig. 10 ist die zweistufige Darstellung der gespeicherten Hologramminformationen ersichtlich, bei der die gespeicherten Hologramminformationen zunächst in Form reeller Zwischenbilder 51 rekonstruiert werden, die durch das Okular 52 betrachtet werden können, so daß die Hologramminformation im Schnittpunkt der gestrichelten Linien 53 als virtuelles Bild sichtbar wird. Das Okular 52 weist dabei wiederum eine Größe auf, daß eine biokulare Betrachtung durch das Okular 52 möglich ist.

Jedes Einzelhologramm des Multiplexhologramms liefert bei seiner Rekonstruktion ein reelles Zwischenbild A′ in einer anderen Entfernung von dem biokularen System 52. Das biokulare System 52 erzeugt dann das virtuelle Bild.

Durch die Blende 52′ wird immer nur ein Hologramm, im dargestellten Ausführungsbeispiel das Hologramm A, ausgeleuchtet. Durch eine Filmtransporteinrichtung wird das Hologramm für die gewünschte Entfernung zum Blendenschlitz 52′ transportiert. Die Rekonstruktion des Hologramms geschieht durch die Lichtquelle und die Kollimatorlinse. Die Rekonstruktion der einzelnen Hologramme könnte auch durch Verschieben des Blendenschlitzes geschehen.

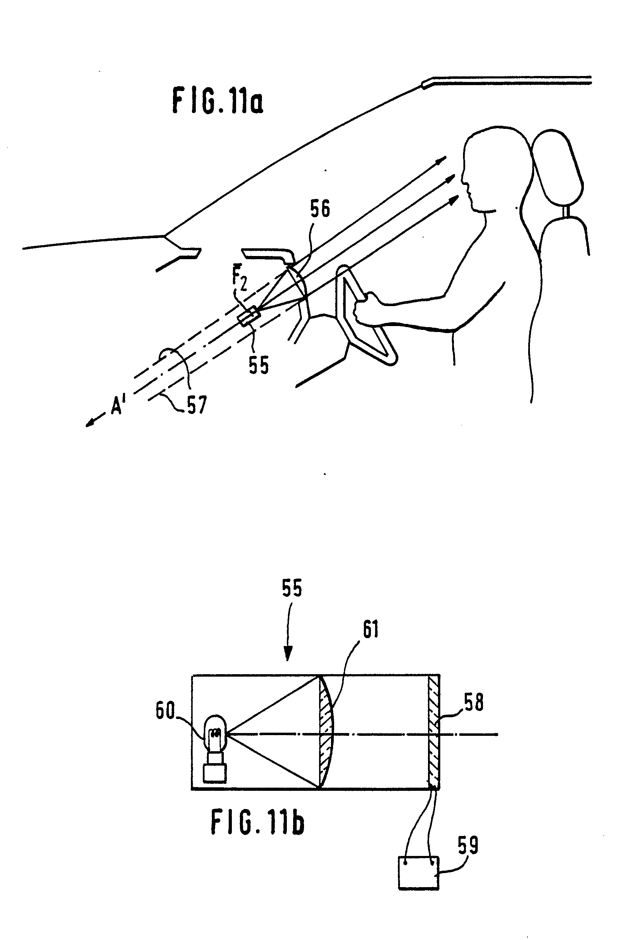

Anhand der Fig. 11a und 11b wird nun der grundsätzliche Aufbau einer Anzeigeeinrichtung beschrieben, bei der die abzulesende Information auf dem Armaturenbrett in einer Weise erscheint, daß diese von dem Fahrer okkommodationsfrei oder nahezu akkommodationsfrei betrachtet werden kann.

Die Information wird durch die Einrichtung 55 erzeugt und kann von dem Fahrer durch die aus beispielsweise einer Lupe bestehende Abbildungsoptik 56 betrachtet werden, so daß sie im Schnittpunkt der gestrichelten Linien 57 als virtuelles Bild erscheint.

Die Informationsausgabeeinrichtung 55 ist in einem Ausführungsbeispiel anhand der Fig. 11b erläutert. Diese besteht wiederum aus einem LCD 58, das zur Erzeugung unterschiedlicher Informationen mit einer Steuereinrichtung 59 versehen ist. Das LCD wird durch die Weißlichtquelle 60 und die Kollimatorlinse 61 ausgeleuchtet.

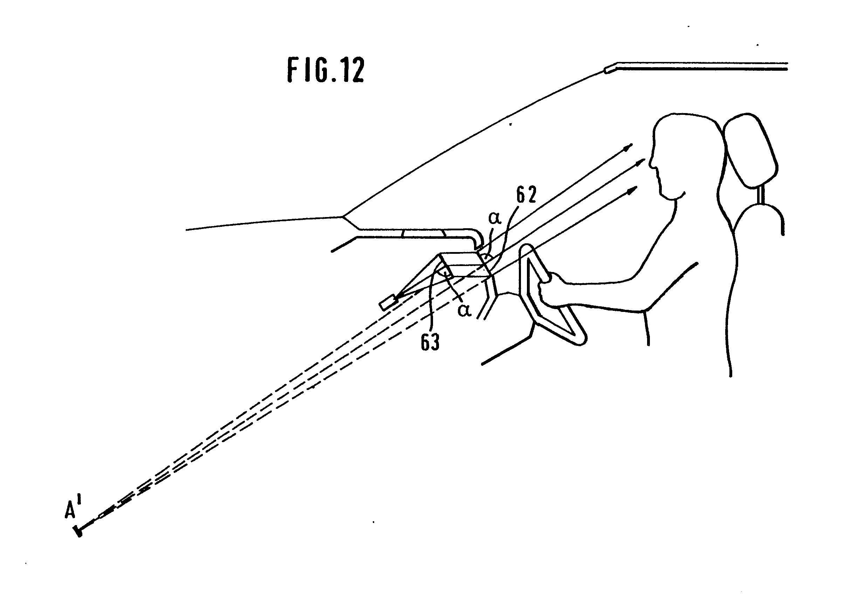

Das Ausführungsbeispiel nach Fig. 12 unterscheidet sich von dem nach Fig. 11 dadurch, daß die Abbildungsoptik aus zwei Hologrammen 62, 63 besteht, von denen eines der Farbkompensation dient. Insofern gelten die vorbeschriebenen Verhältnisse. Das virtuelle Bild erscheint für den Fahrer nahezu akkommodationsfrei im Punkt A′.

Das Anzeigesystem besteht also aus einer holografischen Linse und einem holografischen Gitter zur Kompensation des transversalen Farbfehlers. Der Hauptstrahl wird dabei gegenläufig um den Winkel α gebeugt.

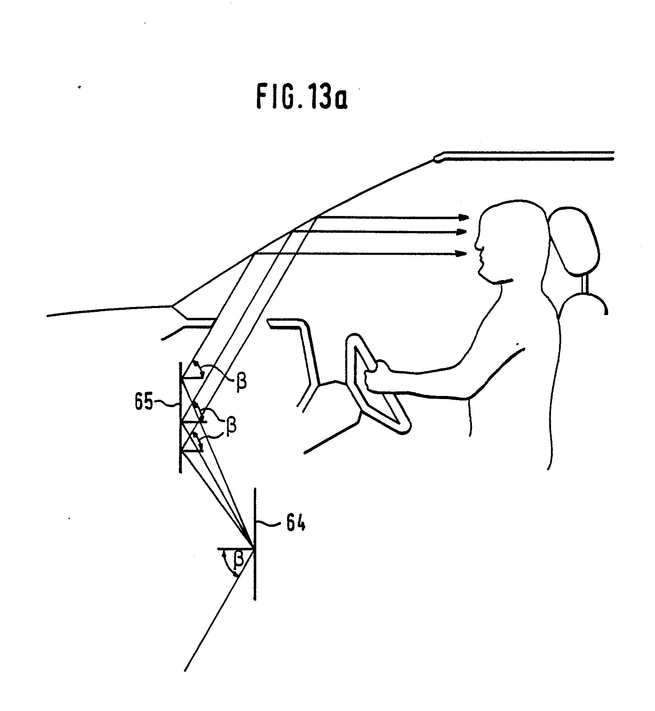

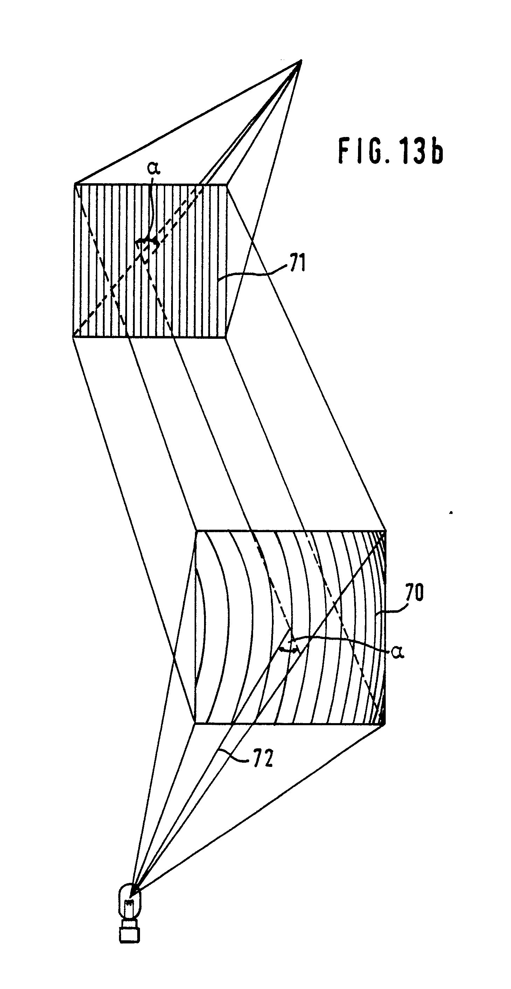

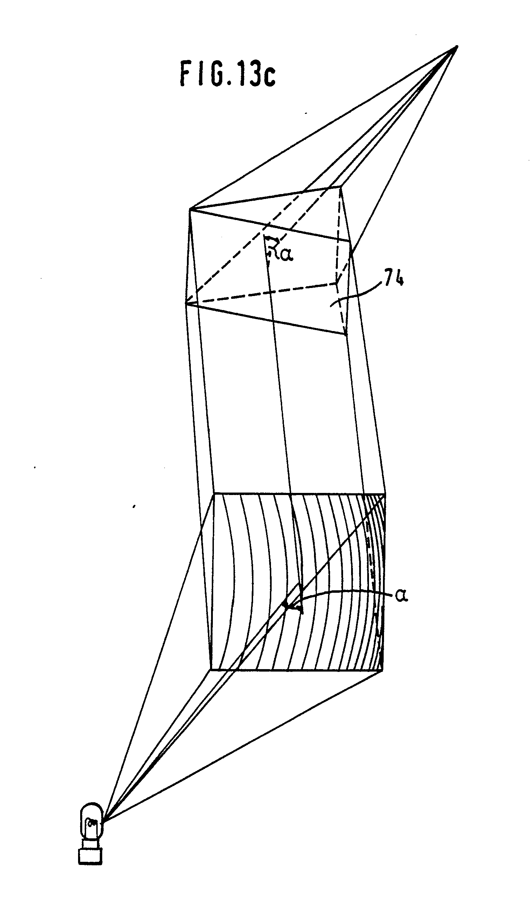

Aus Fig. 13a ist die Art der Farbkompensation bei den Flächenhologrammen 64, 65 ersichtlich. Bei den Hologrammen 64, 65 handelt es sich um verspiegelte Transmissionshologramme. Diese dienen der Kompensation des Farbfehlers in der Weise, daß der Hauptstrahl gegenläufig jeweils um den Winkel B reflektiert wird, so daß der austretende Strahl lediglich eine Parallelverschiebung der Wellen unterschiedlicher Wellenlänge erfährt, so daß das Auge die dadurch aufgeteilten Farben wieder zu der Ausgangsfarbe zusammensetzt.

Der Vorteil der Verwendung von Hologrammen als Abbildungsoptik liegt darin, daß diese sehr klein gehalten werden kann. Würde eine Abbildungsoptik mit gleicher optischer Wirkung aus Linsen aufgebaut werden, würden diese wegen des erforderlichen mehrlinsigen Aufbaus, der erforderlichen Dicke der Linsen und der Anpassung der Linsen aufeinander so viel mehr Raum beanspruchen, daß es Schwierigkeiten bei der Anordnung im Armaturenbrett geben würde. Weiterhin wäre es fertigungstechnisch schwierig, derartige Linsen herzustellen. Ist eine große Abbildungsoptik vorhanden, die durch ein flächiges Hologramm verwirklicht werden kann, ist nicht nur die Herstellung und Anordnung vereinfacht, sondern auch der Ablesekomfort.

Aus Fig. 13b ist die Kompensation des transversalen Farbfehlers der holografischen Linse 70 ersichtlich. Durch ein holografisches Gitter 71 wird der Hauptstrahl 72 um den Winkel α gegensinnig gebeugt. Dadurch werden die in einzelne Farben aufgeteilten Lichtstrahlen wieder derart zusammengeführt, daß sie im Auge des Betrachters als die Ausgangsfarbe erscheinen.

Bei dem Ausführungsbeispiel nach Fig. 13c ist statt des holografischen Gitters 71 ein Prisma 74 vorgesehen. Dieses dient optisch demselben Zweck.

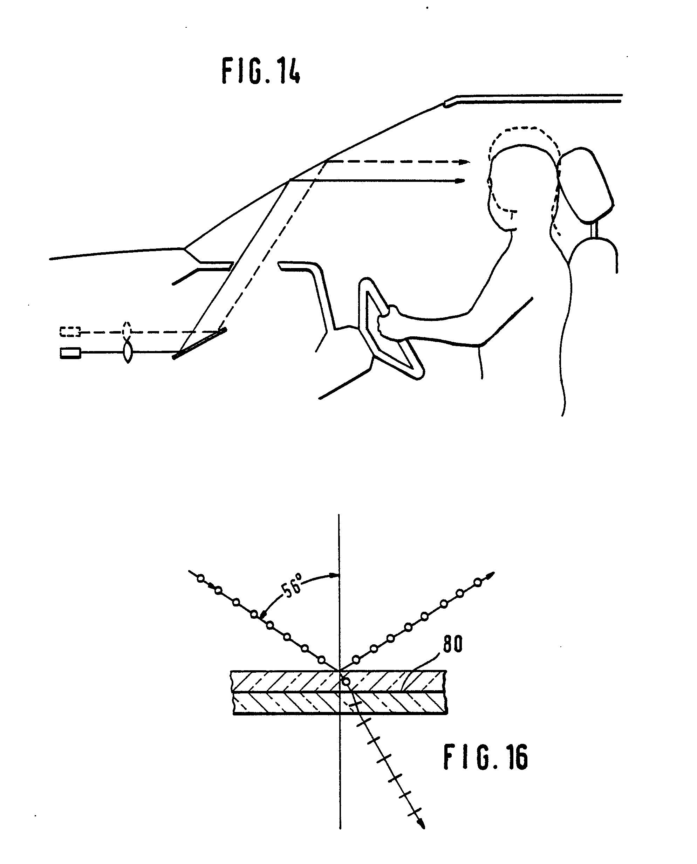

Bei unterschiedlicher Kopfhöhe des Fahrers, beispielsweise bei unterschiedlich großen Fahrern oder nach Verstellung der Sitzhöhe, würde das in die Windschutzscheibe gespiegelte Bild in unterschiedlichen Höhen erscheinen. Aus diesem Grunde ist nach Fig. 14 eine Einrichtung vorgesehen, um die Abbildungsoptik entsprechend der Höhe des Fahrers ebenfalls auf unterschiedliche Höhen einstellen zu können. Diese Justierung und Einstellung ist erforderlich, weil der erscheinende Bildausschnitt relativ klein ist, so daß der Hauptstrahl in Augenhöhe liegen muß.

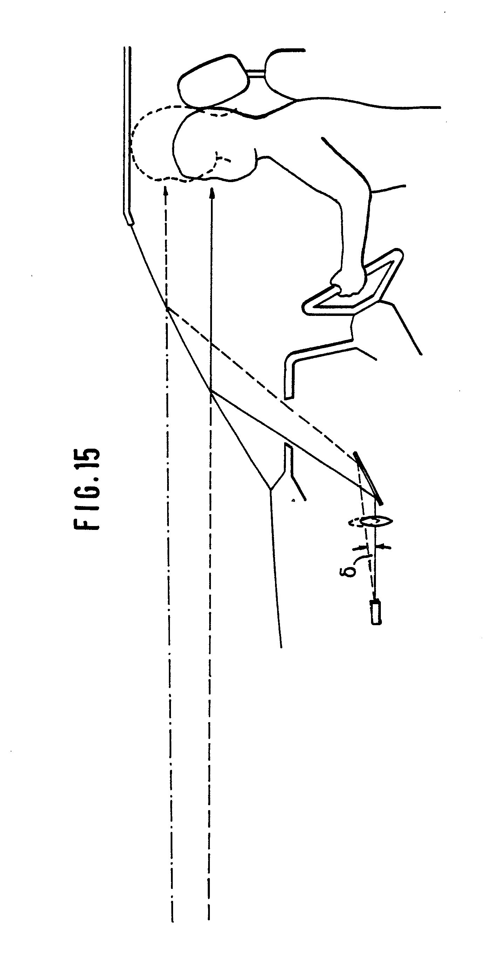

Eine ähnliche Wirkung wird gemäß Fig. 15 erreicht, wenn die Abbildungsoptik geschwenkt wird. Dieses Schwenken hat, wie aus Fig. 15 ersichtlich, jedoch die Wirkung, daß auch das imaginäre Anzeigebild in seiner Höhe verändert wird. Eine derartige Stelleinrichtung kommt daher nur in Betracht, wenn eine derartige Bildverstellung in Kauf genommen werden kann.

Ein besonderes Problem der Einspiegelung von Anzeigeinformationen durch die Windschutzscheibe liegt darin, daß Spiegelbilder sowohl an der Vorder-als auch an der Hinterseite der Windschutzscheibe entstehen können. Um dadurch entstehende Doppelspiegelungen zu vermeiden, wird eine polarisationsdrehende Folie 80 anstatt oder zusätzlich zu der Verbundfolie verwendet. Derartige polarisationsdrehende Folien sind bekannt.

Maximale Reflexion erhält man durch senkrecht zur Einfalzebene linear polarisiertes Licht. Schwingt das Licht in Richtung der Einfallsebene bei einem Winkel von ca. 56° (Brewsterwinkel), erhält man 100 % der Transmission. Die Zeichnung zeigt einen im Brewsterwinkel senkrecht zur Einfallsebene schwingenden Strahl. Dieser wird an der ersten Fläche der Scheibe mit maximalem Reflexionsgrad (ca. 30 %) reflektiert. Die ca. 70 % des trans mittierten Lichts erhalten durch die Polarisationsfolie eine Drehung um 90°, so daß das Licht nun in der Einfallsebene schwingt, d.h. an der Rückfläche der Scheibe tritt keine Reflexion auf.

**Ansprüche**

1. Anzeigesystem, vorzugsweise für Kraftfahrzeuge, mit einem Abbildungssystem, das von einer Lichtquelle über einen Kollimator o.dgl. ausgeleuchtete, der Informationsdarstellung dienende Objekte sichtbar macht,
dadurch gekennzeichnet,
daß die anzuzeigende Information als virtuelles Bild in für die beobachtende Person akkommodationsfreier Darstellung in die Frontscheibe eines Kraftfahrzeugs o.dgl. eingespiegelt (Head-Up-Display) oder durch ein optisches Linsen-und/oder Spiegelsystem und/oder durch holografisch optische Elemente (HOE) im Bereich des Armaturenbrettes o.dgl. dargestellt wird.

2. Anzeigesystem nach Anspruch 1, dadurch gekennzeichnet, daß bei einem Head-Up-Display in dem Abbildungssystem eine die Krümmung der Windschutzscheibe o.dgl. kompensierende Optik vorgesehen ist.

3. Anzeigesystem nach Anspruch 2, dadurch gekennzeichnet, daß die Kompensationsoptik durch mindestens eine entsprechend geschliffene Abbildungslinse oder einen Spiegel gebildet ist.

4. Anzeigesystem nach Anspruch 2, dadurch gekennzeichnet, daß die Kompensationsoptik aus gebogenen Spiegeln besteht.

5. Anzeigesystem nach Anspruch 2, dadurch gekennzeichnet, daß die Kompensationsoptik aus holografischen Planspiegeln oder holografisch optischen Elementen besteht.

6. Anzeigesystem nach einem der vorhergehenden Ansprüche, dadurch gekennzeichnet, daß die dargestellte Information durch Kathodenstrahlröhren (CRT) gebildet wird.

7. Anzeigesystem nach einem der vorhergehenden Ansprüche, dadurch gekennzeichnet, daß die Information des Anzeigesystems durch eine Flüssigkristallanzeige (LCD) mit einer deren Segmente steuernden Steuereinrichtung gebildet wird.

8. Anzeigesystem nach einem der vorhergehenden Ansprüche, dadurch gekennzeichne, daß die Information durch eine ausgeleuchtete Spaltblende oder LED (Leuchtdioden) gebildet wird.

9. Anzeigesystem nach einem der vorhergehenden Ansprüche, dadurch gekennzeichnet, daß die darzustellende Information in einem Hologramm gespeichert ist und aus diesem rekonstruiert wird.

10. Anzeigesystem nach einem der vorhergehenden Ansprüche, dadurch gekennzeichnet, daß die Informationen in Multiplexhologrammen gespeichert sind, die relativ zu dem rekonstruierenden Lichtstrahl beweglich sind.

11. Anzeigesystem nach einem der vorhergehenden Ansprüche, dadurch gekennzeichnet, daß das Abbildungssystem aus Linsen aufgebaut ist.

12. Anzeigesystem nach einem der vorhergehenden Ansprüche, dadurch gekennzeichnet, daß das Abbildungssystem aus holografisch optischen Elementen aufgebaut ist.

13. Anzeigesystem nach einem der vorhergehenden Ansprüche, dadurch gekennzeichnet, daß die Kompensationsoptik aus geschliffenen Linsen oder Spiegeln, aus gebogenen Spiegeln oder Hologrammen besteht.

14. Anzeigesystem nach einem der vorhergehenden Ansprüche, dadurch gekennzeichnet, daß bei der Verwendung holografisch optischer Elemente zur Korrektur des transversalen Farbfehlers ein zweites Hologramm verwendet wird.

15. Anzeigesystem nach einem der vorhergehenden Ansprüche, dadurch gekennzeichnet, daß bei Verwendung eines holografisch optischen Elements zur Korrektur des transversalen Farbfehlers ein Prisma mit genau entgegengesetzter Dispersion verwendet wird.

16. Anzeigesystem nach einem der vorhergehenden Ansprüche, dadurch gekennzeichnet, daß das Abbildungssystem höhenverstellbar oder - schwenkbar angeordnet ist. ·

17. Anzeigesystem nach einem der vorhergehenden Ansprüche, dadurch gekennzeichnet, daß als oder neben der Verbundfolie in der Windschutzscheibe eine polarisationsdrehende Folie vorgesehen ist.

18. Anzeigesystem nach einem der vorhergehenden Ansprüche, dadurch gekennzeichnet, daß die beispielsweise in Form eines Balkens dargestellte Information räumlich bei gleicher Vergrößerung des Balkens durch gesteuerte Veränderung des Sehwinkels in gewünschten, einstellbaren unterschiedlichen Entfernungen darstellbar ist, wobei der jeweilige Sehwinkel, unter dem der Balken erscheint, dem Sehwinkel eines realen Balkens in der gesehenen Entfernung entspricht.

FIG.1

FIG.1a

FIG.1b

FIG.1c

F I G. 1d

85

86

89

90

F I G.1f

87

88

$F_1 = F_2$    $\dot{C}_1$  $\dot{C}_2$

F I G. 1e

# FIG.2

0 286 962

FIG. 2a

# FIG.3

0 286 962

0 286 962

FIG.3a

# FIG.4

0 286 962

FIG.4a

11

# FIG.5

0 286 962

FIG.6

FIG.7

FIG.8a

FIG.8b

FIG.9

FIG.10

FIG.11a

56

$F_2$

55

A'

57

55

61

60

58

FIG.11b

59

FIG.12

62

α

63

α

A'

0 286 962

# FIG.13a

FIG. 13b

α

71

70

α

72

# FIG.13c

$Ra$

74

$\alpha$

FIG. 14

FIG. 16

80

56°

FIG.15

0 286 962